Europäisches Patentamt

(19) European Patent Office

Office européen des brevets

(11) Publication number: **0 104 106**
**A2**

(12) # EUROPEAN PATENT APPLICATION

(21) Application number: 83401708.9

(22) Date of filing: 25.08.83

(51) Int. Cl.³: **C 08 L 101/00**
**//(C08L101/00, 23/08, 77/00)**

(30) Priority: 26.08.82 US 411922

(43) Date of publication of application:
28.03.84 Bulletin 84/13

(84) Designated Contracting States:
DE FR GB IT

(71) Applicant: THE BENDIX CORPORATION
Executive Offices Bendix Center
Southfield Michigan 48037(US)

(72) Inventor: Sorensen, Ian Willard
8826-E. Town & Country Blvd.
Ellicott City Maryland 21043(US)

(74) Representative: Brullé, Jean et al,
Service Brevets Bendix 44, rue François 1er
F-75008 Paris(FR)

(54) Multicomponent thermoplastic polymer blends.

(57) The invention is a multicomponent thermoplastic inter-penetrating polymer network blend having a particulate loaded homopolymer (A) as the network stabilizing phase and a dissimilar thermoplastic resin (B).

Fig-2

EP 0 104 106 A2

-1-

# MULTICOMPONENT THERMOPLASTIC POLYMER BLENDS

## Background of the Invention

## Field of the Invention

The invention is related to multicomponent thermoplastic interpenetrating polymer network blends and in particular the use of polymers loaded with suspended particulates as the structure stabilizing phase.

## Prior Art

Thermoplastic interpenetrating polymer networks (TIPN's) have been developed as is evidenced by U.S. patent 4,088,626 "Multicomponent Polysulfone-Block Copolymer-Polymer Blends" issued to Gergen et al, May 9, 1978 and patent 4,338,227 "Ethylene Copolymer Blends and Adhesives Based Thereon issued to E. C. Ballard July 6, 1982. Gergen et al discloses a multicomponent polymer blend composition comprising an intimately mixed polysulfone, a selectively hydrogenated monoalkenyl arene-diene block copolymer and at least one dissimilar engineering themoplastic resin. The Non-Newtonian flow behavior of block copolymer permits the blend composition to be stress blended at an elevated temperature to form at least one partial continuous network phase which interlocks with the other polymers. This results in a desired balance of properties of the resultant copolymer-polymer blend. Ballard discloses homogeneous blends of at least two cross-linked ethylene copolymers.

Johnson, in U.S. patent 3,629,154 discloses a method for making thin, electrically conductive nonporous dispersed phase polymeric film. The essential ingredient

-2-

of the dispersed phase polymeric film is an ethylene-vinyl acetate copolymer highly loaded with a conductive powder. For processing thin films, polyisobutylene is added to the loaded ethylene-vinyl acetate copolymer to reduce its viscosity.

Takida et al in U.S. patent 3,976,618 discloses a method for making dispersed phase plastic moldings having improved heat deflection characteristics in which large amounts of talc are dispersed in a hydrolyzed ethylene-vinyl acetate copolymer.

In summary the prior art teaches the use of block copolymers as the network structure stabilizing phase in thermoplastic interpenetrating polymer networks (TIPN's). Specifically, the prior art discloses the use of only a hydrogenated monoalkenyl arene-diene block polymer as the structure stabilizing phase.

Materials, other than the hydrogenated monoalkenyl arene-diene block-copolymers disclosed by the prior art, are known to exhibit Non-Newtonian rheological behavior as required for network structure stabilizing phase of thermoplastic interpenetrating polymer networks. R. S. Ziegebaur, and J. M. Caruther in their paper "Rheological Properties of Dispersions of Fused Silica in Polylimethysilorane" presented at the 53rd Annual Meeting of the Society of Rheology, Louisville Kentucky, October 1981 disclosed various other homopolymer materials containing dispersed particulates which exhibit the desired Non-Newtonian properties. Additionally James L. White in his article "Rheological Behavior of Highly Filled/Reinforced Polymer Melts, Plastic Compounds January/February 1982" discusses the Non-Newtonian behavior of polymers loaded with particulates.

Summary

-3-

The invention is a thermoplastic interpenetrating polymer network blend having a homopolymer loaded with a particulate as the structure stabilizing phase. A homopolymer is loaded with a predetermined quanitiy of a suitable particulate to produce a rheological behavior corresponding to the Non-Newtonian behavior of a hydrogenated monoalkenyl arene-diene block copolymer. The loaded homopolymer is then shear mixed with at least one dissimilar engineering thermoplastic resin to form at least one partially continuous network interlocked with the other polymer networks. For example a silicone oil or ethylene vinyl acetate loaded with 30 to 40 percent by weight with carbon block exhibits approximately the same rheological behavior as the block copolymers used as the structure stabilizing phase of the prior art thermoplastic interpenetrating polymer networks. The advantage of the invention is that homopolymers may be used as the structure stabilizing phase of the thermoplastic interpenetrating polymer network permitting a wider selection of materials that can be used to form the blend. This and other advantages of the invention will become more apparent from reading the detailed description of the invention.

## Brief Description of the Drawings

FIGURE 1 is a graph showing the Non-Newtonian rheological behavior of silicone oil loaded with carbon black compared to that of one of the family of block copolymer described by Gergen et al.

FIGURE 2 is a three dimensional model of an idealized interpenetrating polymer network.

FIGURE 3 is a graph showing the electrical conductivity of a dispersed phase ethylene vinyl acetate polymer as a function of carbon black loading compared to

-4-

the electrical conductivity of an interpenetrating polymer network embodying a dispersed phase ethylene vinyl acetate polymer as the structure stabilizing phase.

Detailed Discription of the Invention

Thermoplastic interpenetrating polymer networks such as disclosed by Gergen et al in U.S. patent 4,088,626 utilize the rheological behavior of a selectively hydrogenated monoaklenyl arene-diene block copolymer as the stabilizing phase of the structure's network. The key to the formation of the desired network is the Non-Newtonian behavior of the cited block copolymer which exhibits a "yield stress" in the melt. Below the critical shear stress, the material behaves like an elastic solid, while above the critical shear stress a Non-Newtonian flow occurs. Hence the block copolymer retains its shape when stress is removed. Therefore when the mixing of the thermoplastic alloy containing such a block copolymer is stopped, the block copolymer becomes "frozen" in its shape and forms the stabilizing network structure of the blend.

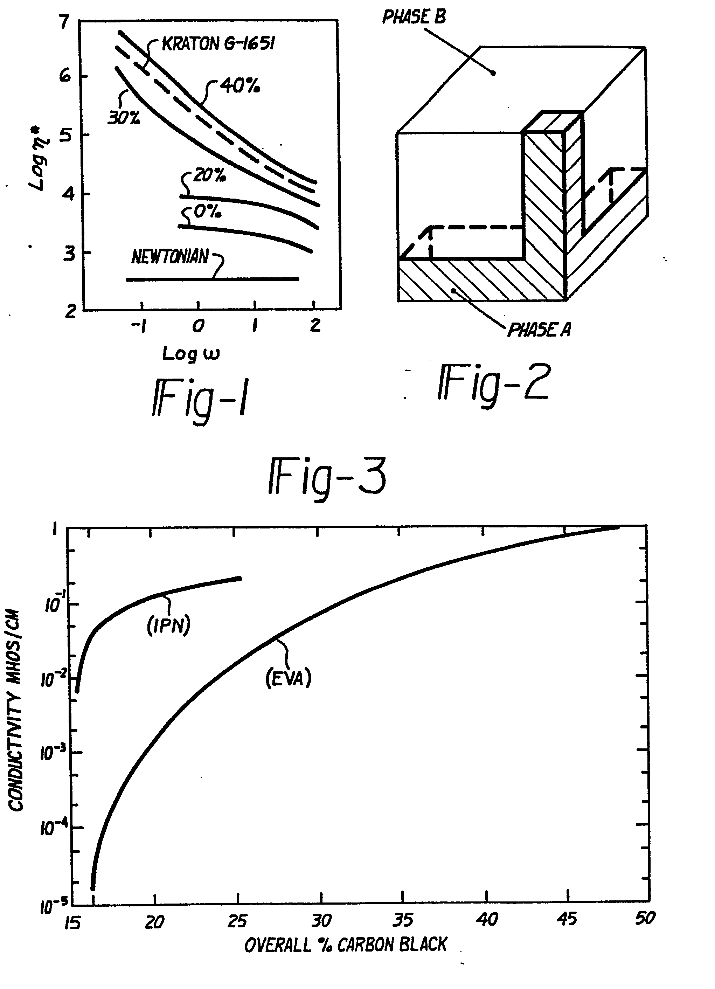

It has been found that many fluids from oils to molten polymers, when loaded with suspended particulates will exhibit rheological behavior comparable to that exhibited by the cited block copolymer. FIGURE 1 is a graph showing the Non Newtonian rheological behavior of a silicone oil, such as Dow Corning 200, a polydimethyl siloxane manufactured by Dow Corning of Midland, Michigan loaded with carbon black, such as Vulcan XC 72 manufactured by Cabot Corporation of Boston, Massachusetts as compared with Kraton G 1651 Rubber, manufactured by Shell Chemical Company of Houston, Texas at a temperature of $40^{\circ}$ C. Kraton G 1651 rubber is a typical block copolymer exhibiting Non-Newtonian rheological behavior similar to that disclosed by Gergen et al for the structure stabilizing component of the interpenetrating polymer network. As shown in FIGURE 1 the dynamic viscosity "$\eta$*" of the silicon oil decreases as a function of shearing frequency "$\omega$" (which is directly related to rate of shear) in contrast to a typical Newtonian behavior where the viscosity is a constant independant of the shearing frequency. In particular, the rheological behavior of silicon oil loaded with carbon black between 30% and 40% by weight has approximately the same rheological behavior as Kraton G 1651. Similar rheological behavior has been obtained with molten polymers loaded with particulates as well as those disclosed by Ziegebaur and Caruthers or J. L. White. As shown in FIGURE 1, the viscosity of the particulate loaded polymer can be adjusted to more closely match the rheological properties of the thermoplastic resin with which it is mixed by controlling the quantity and/or size of the particulate dispersed therein. This allows a much broader application of the thermoplastic interpenetrating polymer network (TIPN) concepts since no copolymer is required.

The idealistic three dimensional model of a thermoplastic interpenetrating polymer network for a two phase polymer blend is illustrated in FIGURE 2. In this model the structure stabilizing polymer, such as a particulate loaded polymer such as the carbon black loaded silicone oil discussed above or ethylene vinyl acetate is identified as Phase A and the engineering thermoplastic resin is identified as Phase B. The Phase A polymer may be selected from any suitable polymer which when loaded with an appropriate particulate exhibits the prerequisite Non-Newtonian rheological properties. The Phase B resin may be selected from any engineering thermoplastic polymer or copolymer as identified by Gergen et al in U.S. patent 4,088,626. These include polyolefins, thermoplastic polyesters, polyamides, polycarbonates, acetal resins, thermoplastic polyurethanes, halogenated thermoplastics, nitrile barrier resins, and blends of these thermoplastic polymers with viscosity modifying resins as are known in the art.

In addition to the advantages cited above, by varying the particulate loading levels as well as the nature and/or size of the particulate, better control of the rheology behavior of the loaded polymer may be achieved. It is also possible to choose the particulate to serve more than one function. For example a carbon black loaded Phase A may be used to impart high electrical or thermal conductivity to the interpenetrating polymer network in addition to acting as the structure stablizing component. A comparison between the experimentally determined electrical conductivity of ethylene vinyl acetate (EVA) loaded with carbon black and the electrical conductivity computed for an interpenetrating polymer network (IPN) with Phase A consisting of ethylene vinyl acetate loaded with the same amount of carbon black is shown in Figure 3. The dramatic increase in conductivity is due to the exponential increase in conductivity resulting from the concentration of carbon black in only one of the continuous interpenetrating network phases. In this computation, the model of Figure 2 for the structure of the interpenetrating network was assumed to be valid and Phase B was an insulator.

As previously indicated, the thermoplastic interpenetrating polymer network is made by first mixing the selected polymer with a predetermined quantity of particulate to form a structure stabilizing Phase A polymer having the desired Non Newtonian rheological behavior. In particular the quantity of particulate added to the polymer is selected to produce a viscosity matching the viscosity of the engineering thermoplastic resin with which it is to be blended at the blending temperature and the blending shear stress rate. The blending temperature is selected to be above the melting temperature of Phase A or B whichever has the highest melting temperature.

Since the better the interdispersion of Phase A and Phase B in the blending process, the better the chance for the formation of co-continuous interlocking networks of the Phase A polymer and Phase B resin, the ratio between the Phase A and Phase B viscosities at the blending temperature and shear stress rate preferably should be in the range from 0.8 to 1.2. However it is recognized the viscosity outside of the prefered range can be blended to form the desired interpenetrating network.

The Phase A and Phase B polymers are heated to the blending temperature and shear mixed at the predetermined shear stress rate until the desired interdispersion of the two Phases is obtained. The blending is then terminated removing the shear stress. Removing the shear stress freezes the blended structure of the Phase A polymer in its stressed state due to its Non Newtonian behavior. The blend is then cooled to below the melting point of Phase B solidifying the blend with the frozen Phase A polymer constituting the structure stabilizing phase of the interpenetrating network. The other polymer due to the frozen phase A structure, must conform to this morphology.

Although the thermoplastic interpenetrating polymer network is discussed in terms of a single engineering thermoplastic resin, it is to be recognized that the blend may comprise more than one Phase B. It is also possible that the Phase B resin may likewise be loaded with a suitable particulate to give it a corresponding Non-Newtonian rheological behavior with both phases functioning as network structure stabilizing phases or Phase B may contain other modifiers such as a modifier to reduce friction or other physical property of the blend.

It is not intended that the invention be limited to the particular polymers and particulates discussed above. It is recognized that other polymers can be loading with particulates and be made to exhibit a Non-Newtonian rheological behavior of the type described herein within the spirit of the invention as set forth in the appended claims.

Claims:

1. A thermoplastic polymer blend having at least a first thermoplastic resin (B) having a determinable viscosity at a blending temperature blended with at least one dissimilar polymer constituent (A) to form an interpenetrating polymer network with said first thermoplastic resin (B) and dissimilar polymer constituent (A) characterized by:

at least one polymer dissimilar from said first thermoplastic resin; and

a predetermined quantity of a particulate loaded into said at least one dissimilar polymer to impart to said at least one dissimilar polymer a Non-Newtonian rheological behavior, said at least one dissimilar polymer loaded with said particulate having a viscosity approximately equal to the determinable viscosity of said first thermoplastic resin at said blending temperature.

2. The polymer blend of Claim 1 wherein said blending temperature is higher than the highest melting point of said thermoplastic resin (B) and said particulate loaded dissimilar polymer (A).

3. The polymer blend of Claims 1 or 2 wherein the ratio of said determinable viscosity and the viscosity of the particulate loaded dissimilar polymer is between 0.8 and 1.2.

4.    The thermoplastic polymer blend of Claim 1 wherein said thermoplastic resin (B) comprises:

a second thermoplastic polymer; and

a predetermined quantity of a second particulate loaded into said second thermoplastic polymer to impart to said second thermoplastic polymer a Non-Newtonian rheological behavior exhibiting said determinable viscosity at said blending temperature.

5.    A method for making a thermoplastic interpenetrating polymer network blend comprising the steps of:

mixing a predetermined quantity of particulate with a polymer to form a dispersed phase polymer (A) having Non-Newtonian rheological behavior;

heating said dispersed phase polymer (A) along with at least one dissimilar thermoplastic resin (B) to a blending temperature;

blending said dispersed phase polymer (A) with said dissimilar thermoplastic resin (B) in a shear blender to produce at least partial continuous interlocked networks between said dispersed phased polymer (A) and said dissimilar thermoplastic resin (B); and

terminating said blending to freeze said dispersed phase polymer (A) in said interlocked network to form said thermoplastic interpenetrating polymer network blend with said dispersed phase polymer (A) being the structure stabilizing phase.

6.    The method of Claim 5 wherein said step of heating includes the step of heating said dispersed phase polymer (A) with one dissimilar thermoplastic resin (B) to said blending temperature.

7. The method of Claim 5 wherein said step of heating includes the step of heating said dispersed phase polymer (A) with at least two dissimilar thermoplastic resins (B).

8. The method of Claims 6 or 7 wherein said method further includes the step of premixing said dissimilar thermoplastic resin (B) with at least one viscosity modifier to change the viscosity of said thermoplastic resin (B) to be approximately equal to said predetermined viscosity.

9. The method of Claims 6 or 7 wherein said method further includes the step of premixing said dissimilar thermoplastic resin (B) with at least one viscosity modifier to change the viscosity of said dissimilar thermoplastic resin (B) and reduce the ratio between the viscosity of the dissimilar thermoplastic resin and the predetermined viscosity to the range between 0.8 and 1.2.

10. The method of Claim 5 wherein said step of mixing includes the step of mixing said predetermined quantity of particulates to cause said predetermined viscosity to be approximately equal to the viscosity of said dissimilar thermoplastic resin (B) at said blending temperature.

11. The method of Claim 5 wherein said step of mixing includes the step of mixing said predetermined quantity of particulates to cause the ratio of said predetermined viscosity to the viscosity of said dissimilar thermoplastic resin (B) to be between 0.8 and 1.2 at said blending temperature and said blending shear stress rate.

12. The method of Claim 5 wherein said step of heating, includes the step of heating said dispersed phase polymer (A) and dissimilar thermoplastic resin (B) to a temperature higher than the melting temperature of said dispersed phase polymer (A) and said dissimilar thermoplastic resin (B).

13. The method of Claim 5 wherein said method further includes the step of mixing a particulate with at least one of said dissimilar thermoplastic resins (B) to form a dispersed phase resin having Non-Newtonian rheological behavior having a viscosity approximately equal to said predetermined viscosity at said blending temperature.

14. The method of Claim 5 wherein said method further includes the step of mixing a particulate with at least one of said dissimilar thermoplastic resins (B) to form a dispersed phase resin having Non-Newtonian rheological behavior and a viscosity at said blending temperature which is between 0.8 and 1.2 of said predetermined viscosity.

15. The method of Claim 5 wherein said particulate is carbon black and said polymer is ethylene vinyl acetate.

16. The method of Claim 15 wherein said dissimilar thermoplastic resin (B) is polyamide.

Fig-1

Fig-2

Fig-3